# EUROPÄISCHE PATENTSCHRIFT

(11) **EP 1 698 226 B1**
(45) Veröffentlichungstag und Bekanntmachung des Hinweises auf die Patenterteilung: **02.01.2008**
(21) Anmeldenummer: 06003341.2
(22) Anmeldetag: 18.02.2006
(51) Int. Cl.: A01K 3/00, A01K 29/00

(54) **Amphibienschutzzaun**
Amphibia fence
Barrière pour amphibie

(30) Priorität: 01.03.2005 DE 102005009834
(43) Veröffentlichungstag der Anmeldung: 06.09.2006
(73) Patentinhaber: Ehlert, Helmut, 06404 Bernburg (DE)
(72) Erfinder: Ehlert, Helmut, 06404 Bernburg (DE)
(74) Vertreter: Leinung, Günter

(56) Entgegenhaltungen:
- EP-B- 1 005 787
- AT-U1- 5 099
- DE-C1- 19 943 529
- DE-U1- 20 001 077
- DE-U1-7202004 001 08
- GB-A- 399 250

## Beschreibung

Die Erfindung betrifft einen Amphibienschutzzaun als Schutz- und Leiteinrichtung für Amphibien, insbesondere von Kröten, Lurchen, Fröschen und dergleichen.

Amphibien der bezeichneten Gattung haben die Gewohnheit, zu bestimmten Zeiten ihren Aufenthaltsort zu wechseln. Auf diesen Wanderungen ist es unvermeidbar, dass die Amphibien Straßen überqueren und dabei Gefahr laufen, von Fahrzeugen überfahren zu werden.

Daher werden zum Schutz dieser Tiere in bestimmten Wanderbereichen, längs von Straßen, Schutzzäune errichtet, welche die Aufgabe haben, als Sperr-, Schutz- und Leiteinrichtungen für Amphibien zu fungieren.
So haben sie die Aufgabe, Amphibien von der Straße fernzuhalten und zum anderen die Tiere in ihrer Wanderung zu leiten, nämlich zu Durchlässen, die die Straßen queren und somit einen ungehinderten und geschützten Durchgang der Tiere garantieren. Diese amphibiengerechten Durchlässe in Straßen dienen der Wiedervernetzung von Amphibienteillebensräumen und sollen so die an- und abwandernden Tiere zu den Durchlässen hinführen. Dabei müssen wirksame Schutz-, Sperr- und Leiteinrichtungen den gesamten Wanderkorridor dieser Tiere erfassen, wobei in bestimmten Längenabschnitten Durchlässe in den Straßenbereichen einzubringen sind, damit die Amphibien geschützt zu den Laichgewässern und zurück zu ihren Landlebensräumen gelangen können.

Die bekannten Amphibienschutzzäune bestehen weitestgehend aus Wandelementen, welche an im Erdreich eingerammten Pfosten befestigt werden. Diese Wandelemente, auch Leitprofile, sind vorrangig aus feuerverzinkten Stahlblechen hergestellt, besitzen im unteren und oberen Bereich Flansche, die zum einen als Laufstege dienen und zum anderen als Überkletterschutz im oberen Bereich der Wandelemente ausgebildet sind.

Mit der DE 199 43 529 C1 ist ein Amphibienschutzzaun bekannt geworden, der aus schussweise aufeinander folgenden Leitprofilen besteht. Je zwei benachbarte Leitprofile sind unter Eingliederung einer Befestigungslasche an einem im Boden verankerten Pfosten befestigt. Die Leitprofile selbst weisen einen bodenseitigen Laufstreifen auf, eine im Wesentlichen vertikale Leitwand sowie einen oberen Überhangstreifen. Die Befestigungslaschen besitzen eine im Querschnitt der Form der Leitprofile angepasste Form, so bestehen diese Befestigungslaschen aus einem Vertikalsteg, einem Bodenschenkel und einem Überhangschenkel. Die Leitprofile als auch die Befestigungslaschen werden über entsprechende Schrauben mit dem im Erdreich eingelassenen Pfosten verschraubt und bilden so einen Amphibienschutzzaun aus.

Die Leitprofile als auch die Befestigungslaschen sind aus einem feuerverzinkten Stahlblech hergestellt. Die verwendeten Pfosten besitzen einen sigma-förmigen Querschnitt und werden mittels einer Abdeckkappe nach oben hin verschlossen.

Ein weiterer Zaun ist aus der GB 399 250 A bekannt, bei dem der Oberflansch gekrümmt ausgebildet ist und eine Verkröpfung besitzt.

Ein Amphibienzaun als Leitrichtung für Kröten und Frösche und dergleichen ist mit der G 93 18 62 90 bekannt geworden, welcher gleichfalls in der EP 1 005 787 B1 beschrieben wird.
Auch dieser Amphibienzaun besteht aus einzelnen Wandelementen, die eine bestimmte Querschnittsstruktur besitzen und an im Erdreich eingelassenen Pfosten befestigt werden. Die Pfosten sind entweder als Doppel-T-Profile ausgebildet oder aus zwei U-Profilen hergestellt.
Die Wandelemente, die an den Pfosten befestigt werden sollen, sind an ihren Endseiten im Bereich des Unter- und Oberflansches mit Schlitzen ausgebildet, mittels denen die einzelnen Wandelemente zu den Pfosten verbunden werden, indem die Schlitze in die Stege der Pfosten eingreifen.
Eine Befestigung der Wandelemente untereinander und zum jeweiligen Pfosten erfolgt über zusätzliche Abdeckungen, die im oberen und unteren Bereich die gefügten Wandelemente übergreifen und mittels Schraubverbindungen zum Ober- und Unterflansch verbunden werden. Die Wandelemente/Planken bestehen aus einem Stahlblech mit einer Überzugs-Zinkschicht, deren Dicke 60 bis 80 µ beträgt.

Diese bekannten Lösungen sind sicher geeignet, Amphibienschutzzäune herzurichten, allerdings bedarf es jedoch erheblicher Aufwendungen hinsichtlich der Befestigung und Verbindung der einzelnen Wandelemente untereinander und zu den Pfosten, wodurch auch die Wirtschaftlichkeit negativ beeinflusst wird.

Der Erfindung liegt daher die Aufgabe zugrunde, einen Amphibienschutzzaun bereitzustellen, bei dem die einzelnen Wandelemente/Leitprofile ohne zusätzliche Befestigungselemente und Abdeckungen zueinander gefügt werden können und ferner die Nachteile des Standes der Technik weitestgehend beseitigt werden.

Erfindungsgemäß wird die Aufgabe mit den Merkmalen des Anspruches 1 gelöst.
Bevorzugte Ausführungen und besondere Gestaltungen der Erfindung sind Gegenstand der Unteransprüche.

Nach der Erfindung hergestellte Leitprofile gewährleisten, dass durch das formschlüssige Fügen der Leitprofile Amphibienschutzzäune in den gewünschten Längen hergerichtet werden können. Dabei garantiert die formschlüssige Verbindung der Leitprofile untereinander eine sichere Verbindung zur Herausbildung eines fortlaufenden Amphibienschutzzaunes, wobei die Leitprofile an den Verbindungsstellen zweier Leitprofile mittels Schraubverbindungen zum im Erdreich verankerten Pfosten verbunden werden. Damit ist eine leichte Montage als auch Demontage möglich, so dass, sollte dies notwendig werden, die Amphibienschutzzäune zu bestimmten Zeiten, wenn keine Amphibienwanderungen stattfinden, auch jederzeit abgebaut, das heißt, demontiert werden können.
Ein nach der Erfindung herausgebildeter Amphibienschutzzaun, kann sowohl im ebenen Gelände als auch an Böschungen eingesetzt werden. Dies bedeutet, im ebenen Gelände werden die notwendigen Pfosten im Erdreich verankert, die zu befestigenden Leitprofile zueinander gefügt und dann zum Pfosten verschraubt. Die Leitprofile besitzen infolge ihrer Herstellung genügend Steifigkeit, so dass ein so herausgebildeter freistehender Amphibienschutzzaun eine genügende Standfestigkeit besitzt und seine Aufgabe als Schutz- und Leitfunktion sowie als Sperrfunktion erfüllt.

Diese Steifigkeit der Leitprofile und in der Gesamtheit des herausgebildeten Amphibienschutzzaunes bleibt auch erhalten, wenn diese vor oder an Böschungen aufgestellt und auf der Rückseite mittels Erdreich oder anderen Füllstoffen verfüllt werden.

Die Leitprofile besitzen die üblich bekannte L-Querschnittsform, die herausgebildet wird durch die senkrechte Leitwand des Leitprofils und den an der senkrechten Leitwand vorgesehenen Ober- und Unterflanschen.

Die formschlüssige Verbindung zweier Leitprofile wird erreicht, indem jedes Leitprofil auf einer Seite im Bereich des Oberflansches mit einer Verkröpfung ausgebildet ist, über die die Leitprofile zueinander gefügt werden. Diese Verkröpfung wird in Abhängigkeit der Dicke der Leitprofile und des Krümmungsradius des Oberflansches bestimmt bzw. von deren Maßen und Formen abgeleitet. Dabei ist die Verkröpfung in analoger Weise zur Form des Oberflansches gekrümmt, konvex ausgebildet, wobei das Kröpfungsmaß kleiner dem zweifachen Dickenmaß des Leitprofils und somit der Dicke des jeweiligen Oberflansches entspricht.

Die Verkröpfung ist ferner so ausgebildet, dass sie ausgehend von der senkrechten Leitwand des jeweiligen Leitprofils ansatzfrei in die Wölbung der Verkröpfung übergeht und durch zwei bestimmte Radien R 1 und R 2 in ihrer Größe und Form herausgebildet wird.

Infolge des ansatzfreien Überganges der Wölbung der Verkröpfung und deren Form und Größe wird gleichfalls gesichert, dass im Bereich der Oberflansche die zu fügenden Leitprofile ansatzfrei zueinander gefügt sind.

Es gehört auch zur Erfindung, dass das Radiusmaß R 1 der Wölbung der Verkröpfung dem Radiusmaß von R 1 des Oberflansches entspricht und das Radiusmaß R 2 der Wölbung kleiner als das Radiusmaß von R 1 ist.

Die Verkröpfung im Oberflansch eines jeden Leitprofils ist in Längsrichtung betrachtet so ausgebildet, dass der Oberflansch übergeht in ein schräg verlaufendes Wölbungsteil, dem sich ein gerade verlaufendes Wölbungsteil anschließt.
Die geometrischen Abmaße für das schräg und das gerade verlaufende Wölbungsteil werden abgeleitet und bestimmt aus den Abmaßen der herzustellenden Leitprofile, was wiederum abhängig ist vom Anwendungs- und Verwendungszweck des herzurichtenden Amphibienschutzzaunes, wobei die Länge des herauszubildenden gerade verlaufenden Wölbungsteiles dem Deckungsmaß zweier Leitprofile entspricht, wenn diese zueinander gefügt und in diesem Überdeckungsbereich zum jeweiligen Pfosten des Amphibienschutzzaunes verbunden werden.

Vorteilhafterweise werden die Leitprofile aus Stahlblechen mit Dickenbereichen von 2,5 bis 3 mm hergestellt und die Stahlbleche sind stückverzinkt.

Von besonderem Vorteil ist, die Leitprofile aus einem bandverzinkten Stahlblech mit den genannten Dickenmaßen herzustellen. Diese drücken sich insbesondere dadurch aus, dass allein durch die Herstellung eines bandverzinkten Stahlbleches geringere Schichtdicken für die Schutzschicht des Stahlbleches notwendig sind, somit sowohl wirtschaftliche als auch ökologische Vorteile für den Einsatz von bandverzinktem Stahlblech sprechen. Ferner ist dabei vorteilhaft, dass beim längenmäßigen Zuschnitt derartiger Leitprofile an den Schnittstellen eine Überzugschicht, eine Katodenschicht, herausgebildet wird, dadurch zusätzliche Schutzisolierungen entfallen können.

Bei einer bevorzugten Ausführungsvariante eines Amphibienschutzzaunes ist es möglich, die Oberseite des Unterflansches eines jeden Leitprofils, der Laufseite der Tiere, diese mit einer Beschichtung aus Kunststoff oder mit einem aufldebbaren Laufbelag zu versehen, wodurch die Begehbarkeit wesentlich verbessert wird und auch ein gewisser Laufschutz für die Tiere gegeben ist.

Mit nachfolgendem Ausführungsbeispiel soll die Erfindung näher erläutert werden.

Die dazugehörigen Zeichnungen zeigen in
- Figur 1:: eine Teilansicht eines erfindungsgemäßen Amphibienschutzzaunes in einer Explosionsdarstellung,
- Figur 2:: eine vergrößerte Einzelansicht zweier verbundener Leitprofile,
- Figur 3:: eine Frontansicht eines Leitprofils und
- Figur 4:: Schnittansichten A - A und B - B nach Figur 3.

Ein Amphibienschutzzaun wird herausgebildet durch das Fügen von Leitprofilen 1, welche in dieser gefügten Position an den im Erdreich verankerten Pfosten 6 mittels Schraubverbindungen befestigt werden.

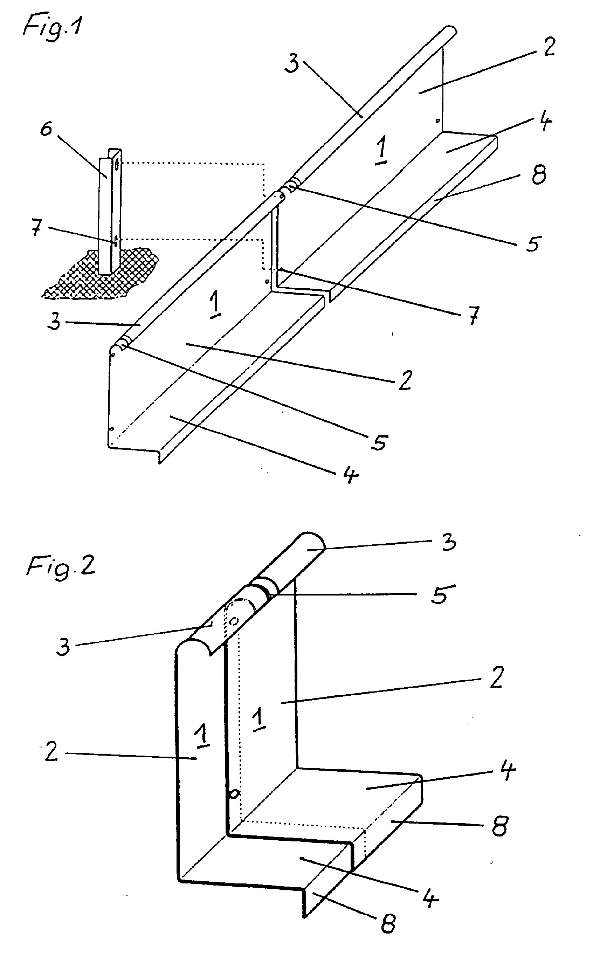

Die Figur 1 zeigt in der Explosionsdarstellung, wie die Leitprofile 1 zueinander gefügt und dann über die im Pfosten 6 und in den Leitprofilen 1 vorgesehenen Langlöchern zueinander positioniert und dann miteinander verschraubt werden. Gezeigt wird ferner die Ausbildung der Leitprofile 1, welche aus einer senkrechten Leitwand 2 bestehen und im oberen Bereich einen Oberflansch 3 und im unteren Bereich einen Unterflansch 4 besitzen. Der Unterflansch 4 ist dabei frontseitig mit einer Abkantung 8 ausgebildet, wobei der Unterflansch 4 gleichzeitig aus Lauffläche, als Laufsteg für die Amphibien dient und mit einer gewissen Neigung, weggerichtet von der senkrechten Leitwand 2, ausgebildet sind.
Der Oberflansch 3 eines jeden Leitprofils 1 ist gekrümmt ausgebildet, dies derart, dass der Oberflansch 3 eine nach außen gerichtete Wölbung aufweist, somit konvex ausgebildet ist.
Die Figur 1 zeigt die Positionierung zweier Leitprofile 1 kurz vor dem Zusammenfügen, während die gefügte Position zweier Leitprofile 1 in der Figur 2 dargestellt ist. Diese Verbindung zweier Leitprofile 1 erfolgt derart, dass das rechte Leitprofil 1 zu dem linken Leitprofil 1 gefügt wird. Dies wird erreicht, dass beim Verbinden der Leitprofile 1 die auf der linken Seite des rechten Leitprofils 1 im Oberflansch 3 vorgesehene Verkröpfung 5 den Oberflansch 3 des linken Leitprofils 1 untergreift. Das heißt, unter diesen Oberflansch 3 eingeschoben wird. Während des Zueinanderfügens dieser beiden Leitprofile 1 überlappt das rechte Leitprofil 1 mit seiner senkrechten Leitwand 2 und seinem Unterflansch 4 sowie seiner Abkantung 8 deckungsgleich die senkrechte Leitwand 2, den Unterflansch 4 und die Abkantung 8 des linken Leitprofils 1.
Neben des formschlüssigen Verbindens dieser beiden Leitprofile 1 ist die Möglichkeit gegeben, mittels Blechtreibschrauben die Flansche 4 der Leitbleche 1 miteinander zu verschrauben, somit eine sichere Verbindungsstelle herausgebildet wird.

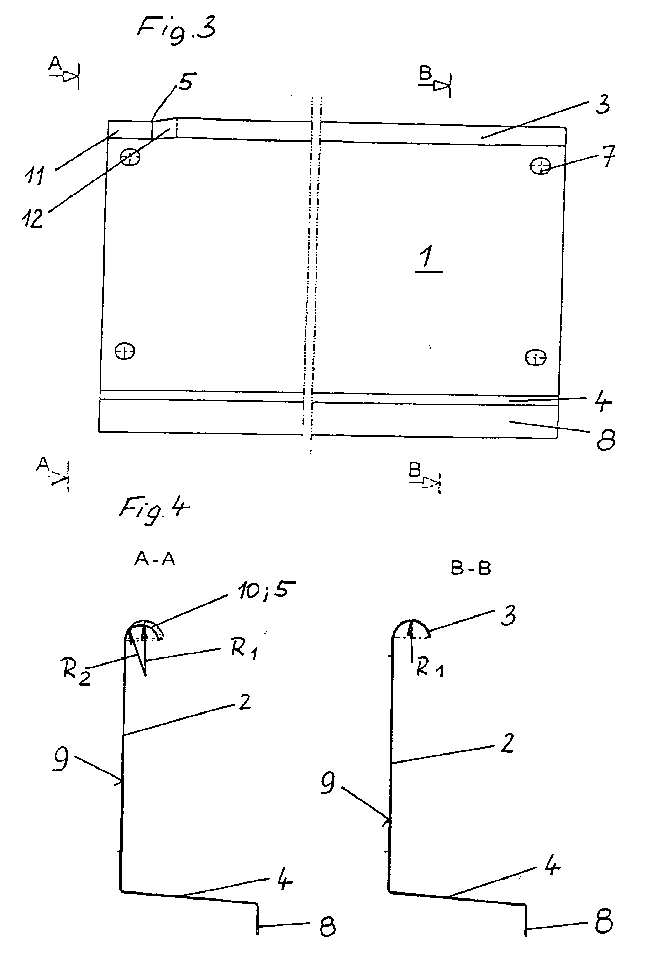

Die Ausbildung eines Leitprofils 1 mit der im Oberflansch 3 herausgebildeten Verkröpfung 5 ist in einer Frontansicht eines Leitprofils 1 in der Figur 3 und in den Schnittdarstellungen in der Figur 4 gezeigt.
So zeigt Figur 3, dass die Verkröpfung 5, ausgehend vom Oberflansch 3, in ein schräg verlaufendes Wölbungsteil 12 übergeht und von dort in das gerade verlaufende Wölbungsteil 11. Beide Wölbungsteile 11/12 sind gekrümmt ausgebildet, wobei das gerade Wölbungsteile 11 in seiner konvexen Ausbildung durch die Radien R 1 und R 2 bestimmt wird.
Dies ergibt sich insbesondere aus den Darstellungen gemäß der Figur 4, bei der die Schnittansicht A - A die konvexe Ausbildung des geraden Wölbungsteils 11 der Verkröpfung 5 mit den Radien R 1 und R 2 und die Schnittdarstellung B - B die konvexe Ausbildung des Oberflansches 3 eines Leitprofils 1 mit dem Radius R 1 zeigen.

So wird die konvexe Form des Oberflansches 3 durch eine konstant verlaufende Krümmung durch das Maß des konstanten Radius R 1 herausgebildet, demgegenüber wird die konvexe Form der Wölbung 10 der Verkröpfung 5 durch zwei Radien R 1 und R 2 bestimmt, welche unterschiedliche Radienmaße besitzen. So verläuft die Wölbung 10 der Verkröpfung 5 ansatzfrei von der Rückseite 9 der senkrechten Leitwand 2 unter dem Radiusmaß R 2, welches kleiner ist als das Radiusmaß R 1 und geht dann in den Krümmungsradius R 1 über und nimmt dann auslaufend wieder ein Krümmungsmaß nach dem Radiusmaß R 2 an. Durch diese Veränderungen der Krümmungsform wird die Wölbung 10 weitestgehend exzentrisch zur senkrechten Leitwand 2 des Leitprofils 1 herausgebildet, dadurch ein leichtes Fügen von zwei Leitprofilen 1 in ihren Oberflanschbereichen gewährleistet.
Dies bedeutet, dass die Form der Wölbung 10 der Verkröpfung 5 in der dargestellten Ausbildung abhängig ist von der Form, der Krümmung des Oberflansches 3 und dessen Abmaßen, wobei das jeweilige Dickenmaß des Leitprofils 1 bei der Bestimmung der Radienmaße für R 1 und R 2 Berücksichtigung finden. Bei einem Radiusmaß R 1 von beispielsweise 25 bis 35 mm ist der Krümmungsradius R 2 entsprechend kleiner ausgebildet und dem Radius R 1 angepasst.

### Aufstellung der verwendeten Bezugszeichen

- 1: - Leitprofil
- 2: - senkrechte Leitwand
- 3: - Oberflansch
- 4: - Unterflansch
- 5: - Verkröpfung
- 6: - Pfosten
- 7: - Langlöcher
- 8: - Abkantung
- 9: - Rückseite der senkrechten Leitwand 2
- 10: - Wölbung der Verkröpfung 5
- 11: - gerade verlaufendes Wölbungsteil
- 12: - schräg verlaufendes Wölbungsteil

## Patentansprüche

1. Amphibienschutzzaun als Leit- und Schutzeinrichtung für Amphibien, insbesondere von Kröten, Lurchen, Fröschen und dergleichen, der aus im Erdreich verankerten Pfosten (6) und an den Pfosten (6) befestigbaren Leitprofilen (1) gebildet ist, die Leitprofile (1) aus einer senkrechten Leitwand (2) mit abgewinkelten Ober- und Unterflanschen (3;4) bestehen, die gefügten Leitprofile (1) mittels Schraubelementen zu den Pfosten (6) auswechselbar verbunden sind, **dadurch gekennzeichnet, dass** der Oberflansch (3) vom Leitprofil (1) unter einem bestimmten Radius gekrümmt, konvex ausgebildet ist, auf einer Seite vom Leitprofil (1) der Oberflansch (3) eine Verkröpfung (5) besitzt, die im gefügten, eingebauten Zustand den Oberflansch (3) des vorhergehenden Leitprofils (1) untergreift,
die Verkröpfung (5) mit einem Kröpfungsmaß kleiner dem zweifachen Dickenmaß des Oberflansches (3) ausgebildet ist, die Wölbung (10) der Verkröpfung (5), ausgehend von der Rückseite (9) der senkrechten Leitwand (2) exzentrisch zu dieser ausgebildet und die Form der Wölbung (10) durch zwei Radien R 1 und R 2 bestimmt ist, wobei R 1 dem Radiusmaß der Krümmung der Oberflansche (3) entspricht und R 2 kleiner R 1 ist.

2. Amphibienschutzzaun, nach Anspruch 1, **dadurch gekennzeichnet, dass**
die Verkröpfungen (5) aus einem gerade verlaufenden Wölbungsteil (11) und einem geneigt verlaufenden Wölbungsteil (12) bestehen.

3. Amphibienschutzzaun, nach Anspruch 2, **dadurch gekennzeichnet, dass**
die längenmäßige Ausbildung der gerade und schräg verlaufenden Wölbungsteile (11; 12) der Verkröpfungen (5) abgeleitet und bestimmt werden aus der Größe der Leitprofile (1) und die Länge des gerade verlaufenden Wölbungsteiles (11) dem Maß der Überdeckung zweier zu fügenden Leitprofile (1) entspricht.

4. Amphibienschutzzaun, nach einem der vorhergehenden Ansprüche, **dadurch gekennzeichnet, dass**
die Leitprofile (1) aus Stahlblech mit Dicken von 2,5 bis 3 mm bestehen und diese Stahlbleche stückverzinkt sind.

5. Amphibienschutzzaun, nach einem der vorhergehenden Ansprüche, **dadurch gekennzeichnet, dass**
vorzugsweise die Leitprofile (1) aus bandverzinktem Stahlblech hergestellt sind.

6. Amphibienschutzzaun, nach Anspruch 1 und 5, **dadurch gekennzeichnet, dass**
die Stirnflächen der Leitprofile (1) bei Verwendung von bandveizinktem Stahlblech nach ihrem Zuschnitt mit einer die Stirnflächen überdeckenden Katodenschicht ausgebildet sind.

## Claims

1. Amphibian safety fence as a guiding and protecting device for amphibians, especially for toads, frogs, and the like, composed of posts (6) anchored in the soil and guide sections (1) attachable to the posts (6), where the guide sections (1) are composed of a vertical guide wall (2) with angled upper and lower flanges (3; 4) where the assembled guide profiles (1) are attached interchangeably to the posts (6) by means of screw elements, **characterised** as follows:-
The upper flange (3) of the guide section (1) is curved with a specific radius, has a convex shape, and a shoulder piece (5) on one side of the guide section (1), which slides under the upper flange (3) of the preceding guide section (1) and engages. The offset of the shoulder piece (5) is less than twice the thickness of the upper flange (3). The bulging (10) of the shoulder piece (5) from the back (9) of the vertical guide wall (2) is offset from that wall. The shape of the bulging (10) is determined by radius R 1 and radius R 2, where R 1 is the radius of the curvature of the upper flanges (3) and R 2 is smaller than R 1.

2. Amphibian safety fence according to Claim 1, **characterised** as follows:-
Each shoulder piece (5) consists of a straight bulging part (11) and an inclined bulging part (12).

3. Amphibian safety fence according to Claim 2, **characterised** as follows:-
The longitudinal design of the straight and inclined bulging parts (11; 12) of the shoulder pieces (5) are derived from, and determined by the size of the guide sections (1). The length of the straight bulging part (11) corresponds to the overlapping length of two assembled guide sections (1).

4. Amphibian safety fence according to one of the preceding Claims, **characterised** as follows:-
The guide sections (1) are made of sheet steel (thickness 2.5 mm to 3.0 mm). The steel sheets are batch-galvanised.

5. Amphibian safety fence according to one of the preceding Claims, **characterised** as follows:-
The guide sections (1) are preferably made from continuously galvanised sheet steel.

6. Amphibian safety fence according to Claims 1 and 5, **characterised** as follows:-
After cutting, the end faces of continuously galvanised guide sections (1) are equipped with a cathode layer.

## Revendications

1. Clôture de protection pour les amphibiens, conçue sous forme de dispositif de guidage et de protection pour les amphibiens, notamment pour les crapauds, les grenouilles etc., constituée de poteaux (6) ancrés dans la terre et de profilés de guidage (1) fixables au niveau des poteaux (6), les profilés de guidage (1) étant composés d'une paroi de guidage verticale (2) avec des brides supérieures et inférieures pliées (3 ; 4) et les profilés de guidage assemblés (1) étant reliés aux poteaux (6) de façon interchangeable au moyen d'éléments à vis, **caractérisée par le fait**
**que** la bride supérieure (3) du profilé de guidage (1) présente une forme courbée et convexe avec un rayon bien déterminé, que la bride supérieure (3) comporte, sur une face du profilé de guidage (1), un coudage (5) qui saisit par en-dessous la bride supérieure (3) du profilé de guidage précédent (1) à l'état monté assemblé, que le coudage (5) est formé avec un niveau de coudage inférieur à deux fois le niveau d'épaisseur de la bride supérieure (3), que la courbure (10) du coudage (5) est formée, depuis la face arrière (9) de la paroi de guidage verticale (2), de façon excentrique à celle-ci et que la forme de la courbure (10) est définie par deux rayons R1 et R2, R1 correspondant à la mesure du rayon de la courbure de la bride supérieure (3) et R2 étant inférieur à R1.

2. Clôture de protection pour les amphibiens, selon la revendication n°1, **caractérisée par le fait**
**que** les coudages (5) sont composés d'une partie courbure droite (11) et d'une partie courbure inclinée (12).

3. Clôture de protection pour les amphibiens, selon la revendication n°2, **caractérisée par le fait**
**que** la formation longitudinale des parties courbure droite et inclinée (11 ; 12) des coudages (5) est dérivée et définie à partir de la taille des profilés de guidage (1) et que la longueur de la partie courbure droite (11) correspond à la mesure du recouvrement de deux profilés de guidage à assembler (1).

4. Clôture de protection pour les amphibiens, selon l'une des revendications précédentes, **caractérisée par le fait**
**que** les profilés de guidage (1) sont composés de tôle d'acier avec des épaisseurs de 2,5 à 3 mm et que ces tôles d'acier sont galvanisées par pièce.

5. Clôture de protection pour les amphibiens, selon l'une des revendications précédentes, **caractérisée par le fait**
**que** les profilés de guidage (1) sont, de préférence, fabriqués à partir de tôles d'acier galvanisées par bande.

6. Clôture de protection pour les amphibiens, selon les revendications n°1 et n°5, **caractérisée par le fait**
**que** les surfaces des profilés de guidage (1) sont formées selon leur coupe avec une couche de cathodes recouvrant les surfaces en cas d'utilisation de tôle d'acier galvanisée par bande.
